# FASCICULE DE BREVET EUROPEEN

(11) **EP 4 124 567 B1**
(45) Date de publication et mention de la délivrance du brevet: **12.02.2025**
(21) Numéro de dépôt: 22186198.2
(22) Date de dépôt: 21.07.2022
(51) Int. Cl.: B64C 13/04, B64C 25/40

(54) **DISPOSITIF D'AIDE AU PILOTAGE D'UN AÉRONEF AU TAXIAGE, UTILISANT AU MOINS UN MOTEUR ET AU MOINS UN ORGANE DE FREINAGE, AÉRONEF ET PROCÉDÉ ASSOCIÉS**
VORRICHTUNG ZUR UNTERSTÜTZUNG DES STEUERNS EINES FLUGZEUGS BEI TAXI, UNTER VERWENDUNG VON MINDESTENS EINEM MOTOR UND MINDESTENS EINEM BREMSTEIL, FLUGZEUG UND ZUGEHÖRIGES VERFAHREN
DEVICE FOR ASSISTING THE PILOTING OF AN AIRCRAFT IN TAXIING, USING AT LEAST ONE ENGINE AND AT LEAST ONE BRAKING DEVICE, ASSOCIATED AIRCRAFT AND METHOD

(30) Priorité: 26.07.2021 FR 2108073
(43) Date de publication de la demande: 01.02.2023
(73) Titulaire: Dassault Aviation, 75008 Paris (FR)
(72) Inventeur: BEAUCAMP, Angélique, 92214 SAINT CLOUD (FR); LE CORRE, Nicolas, 92214 SAINT CLOUD (FR); PINEAU, François, 92214 SAINT CLOUD (FR)
(74) Mandataire: Lavoix

(56) Documents cités:
- US-A1- 2011 004 376
- US-A1- 2015 364 045
- US-A1- 2017 305 571

## Description

La présente invention concerne un dispositif d'aide au pilotage d'un aéronef au taxiage, selon le préambule de la revendication 1. Un dispositif d'aide au pilotage connu est décrit dans US2017/305571 ainsi que dans les US2015/364045 et US2011/004376.

Le dispositif d'aide au pilotage de l'aéronef au taxiage est par exemple disposé dans le cockpit d'un aéronef, pour aider le pilote à contrôler et à piloter la vitesse de l'aéronef au taxiage, lorsque l'aéronef roule sur le sol entre son point de parking et la piste sur laquelle il décolle ou il atterrit.

Le taxiage de l'aéronef sur le sol se produit au début et à la fin de chaque vol. Il implique un déplacement de l'aéronef sur des voies de circulation qui sont parfois sinueuses, en pente, en présence d'obstacles ou de trafic.

Le taxiage doit en outre parfois être réalisé avec des contraintes horaires liées aux créneaux de décollage ou d'atterrissage, pour libérer au plus vite la piste.

Pour les pilotes, le taxiage requiert donc une charge de travail importante, puisque l'environnement dans lequel l'aéronef évolue est potentiellement dense, et présente des obstacles proches.

Le pilote en charge du taxiage doit donc à la fois s'orienter sur le terrain, surveiller les obstacles et le trafic, et contrôler la vitesse de roulage de l'aéronef.

Afin d'établir et de maintenir la vitesse de roulage souhaitée, il doit utiliser deux commandes différentes, à savoir la manette des gaz et les freins.

La manette des gaz fournit une poussée résiduelle permettant d'établir et de maintenir la vitesse de roulage souhaitée et les freins permettent de diminuer la vitesse en cas de nécessité.

Le pilotage au taxiage ne donne donc pas entière satisfaction, notamment au niveau du confort des passagers et de la pilotabilité.

Les moteurs de l'aéronef sont conçus pour le vol et sont donc par nature dimensionnés pour fournir des poussées très supérieures à celles nécessaire au roulage. Les poussées (élevées) et les dynamiques de réponse (lentes au sol) sont problématiques pour le taxiage.

Il arrive parfois que le pilote accélère plus qu'il ne le souhaite, pour permettre à l'aéronef d'atteindre une vitesse de roulage cible. En outre, le pilote est parfois amené à freiner soudainement. Plus généralement, le pilote peut avoir du mal à établir la vitesse de roulage cible, ce qui se traduit par des accélérations et/ou des décélérations peu confortables pour les passagers.

D'autres systèmes ne présentent pas cette problématique, il est connu par exemple de US2015210383 d'équiper les roues de l'aéronef d'un système d'entraînement indépendant, notamment d'un moteur électrique, et de fournir au pilote un dispositif séparé d'aide au pilotage de l'aéronef au taxiage qui permet de commander le moteur électrique pour faire évoluer l'aéronef à une vitesse de consigne.

Cependant, un tel système nécessite d'ajouter un moteur électrique supplémentaire sur l'aéronef. En outre, le pilotage au taxiage est effectué en vitesse avec le seul moteur, ce qui peut toujours conduire, dans certains cas, à des désagréments pour les passagers, si l'accélération ou la décélération est trop importante.

Un but de l'invention est donc de fournir un dispositif d'aide au pilotage d'un aéronef au taxiage qui soit simple à mettre en œuvre sur un aéronef, tout en permettant de diminuer la charge de travail du pilote lors du taxiage.

A cet effet, l'invention a pour objet un dispositif d'aide de pilotage d'un aéronef au taxiage selon la revendication 1.

Le dispositif d'aide au pilotage d'un aéronef au taxiage selon l'invention peut comprendre l'une ou plusieurs des caractéristiques des revendications 2 à 11 ou l'une des caractéristiques suivantes, prise(s) isolément ou suivant toute combinaison techniquement possible :
- la centrale de commande contient une table ou une formule de correspondance associant à chaque actionnement de l'organe de commande, une valeur de commande de pilotage, notamment d'accélération ou de décélération à commander ;
- l'organe de commande comporte un support, une manette montée mobile dans le support, et au moins un capteur de position, destiné à mesurer la position de la manette mobile par rapport au support, le capteur de position étant propre à mesurer une information représentative de la position de la manette mobile et à transmettre à chaque instant l'information représentative à la centrale de commande pour que la centrale de commande engendre la commande de pilotage au taxiage, notamment d'accélération ou de décélération de l'aéronef ou de vitesse de taxiage, en fonction de l'écart entre la position courante de la manette mobile et une position de neutre.

L'invention a également pour objet un aéronef selon la revendication 12.

L'invention a également pour objet un procédé de pilotage du taxiage d'un aéronef selon la revendication 13.

L'invention sera mieux comprise à la lecture de la description qui va suivre, donnée uniquement à titre d'exemple, et faite en se référant aux dessins annexés, sur lesquels :
- [Fig. 1] la figure 1 est une vue schématique de dessus d'un aéronef équipé d'un premier dispositif d'aide au pilotage de l'aéronef au taxiage selon l'invention ;
- [Fig. 2] la figure 2 est une vue schématique d'un organe de commande du dispositif d'aide au pilotage de l'aéronef au taxiage de la figure 1 ;
- [Fig. 3] la figure 3 est un schéma d'évolution illustrant l'activation et la désactivation du dispositif d'aide au pilotage de l'aéronef au taxiage ;
- [Fig. 4] la figure 4 est un schéma illustrant l'évolution de l'organe de commande, lors de la mise en œuvre d'une commande d'accélération de l'aéronef, par rapport à une position de neutre fixe ;
- [Fig. 5] la figure 5 est une vue analogue à la figure 4, lors de la mise en œuvre d'une commande de décélération de l'aéronef, par rapport à la position de neutre fixe ;
- [Fig. 6] la figure 6 est une vue analogue à la figure 4, lors de la mise en œuvre d'une commande d'accélération maximale, et ce jusqu'à la vitesse maximale de l'aéronef au taxiage, par rapport à la position de neutre fixe ;
- [Fig. 7] la figure 7 est une vue analogue à la figure 4, lors de la mise en œuvre d'une commande de décélération maximale de l'aéronef, par rapport à la position de neutre fixe ;
- [Fig. 8] la figure 8 est une vue analogue à la figure 7, lors de la mise en œuvre d'une commande de décélération maximale de l'aéronef, en utilisant un cran de blocage de l'organe de commande ;
- [Fig. 9] [Fig. 10] [Fig. 11] [Fig. 12] [Fig. 13] les figures 9 à 13 sont des vues analogues aux figures 4 à 8, dans lesquelles la position de neutre est un neutre mobile.

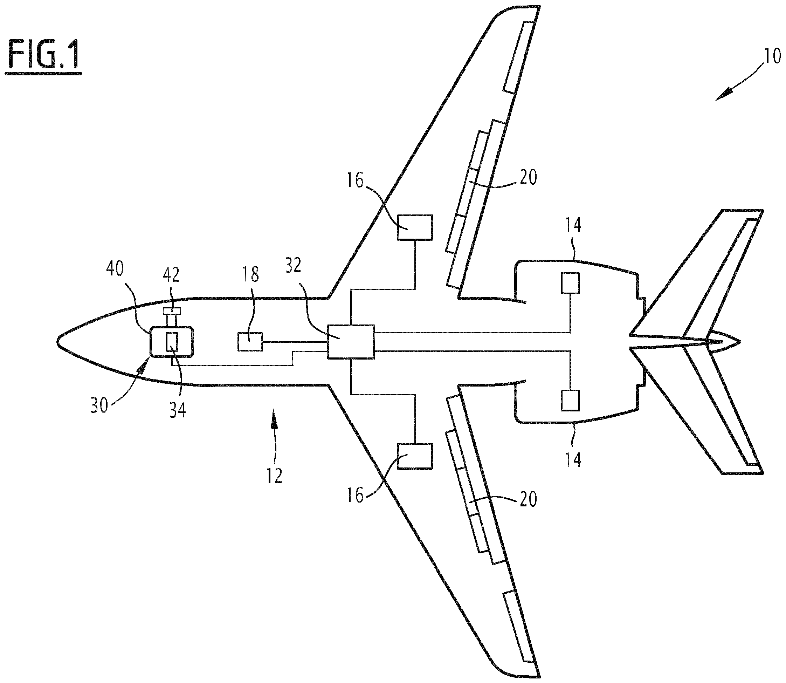

Un premier aéronef 10 muni d'un dispositif d'aide au pilotage de l'aéronef au taxiage 12 selon l'invention est illustré schématiquement sur la figure 1. Le dispositif d'aide au pilotage de l'aéronef au taxiage 12 est de préférence localisé dans le cockpit de l'aéronef 10.

L'aéronef 10 comporte au moins un moteur de propulsion 14, de préférence plusieurs moteurs de propulsion 14, propres à engendrer une poussée de l'aéronef 10. Chaque moteur de propulsion 14 est par exemple notamment un moteur à réaction ou un turbopropulseur.

L'aéronef 10 comporte en outre des roues (non visibles), au moins un organe de freinage 16 associé à chaque roue du train principal, pour ralentir et stopper l'aéronef 10 roulant sur le sol, et au moins un organe d'actionnement 18 de l'organe de freinage 16, disposé de préférence dans le cockpit de l'aéronef 10.

Chaque moteur de propulsion 14 et chaque organe de freinage 16 sont propres à être commandés chacun par le dispositif d'aide au pilotage de l'aéronef au taxiage 12, lors du roulage de l'aéronef 10 au sol.

Ainsi, chaque moteur de propulsion 14 est propre à être commandé pour faire évoluer une force de poussée sur l'aéronef 10, augmentant ou diminuant l'énergie mécanique de l'aéronef 10 lors de son roulage. Chaque organe de freinage 16 est propre à agir sur au moins une roue de l'aéronef 10, pour ralentir la rotation de la roue, par exemple par frottement, et réduire l'énergie mécanique de l'aéronef 10 lors de son roulage.

L'aéronef 10 comporte en outre au moins un capteur de mesure de la vitesse de roulage courante et au moins un afficheur, de préférence situé dans le cockpit, propre à afficher une valeur de vitesse de roulage sur la base des données du capteur de mesure de la vitesse de roulage courante.

De manière connue, l'aéronef 10 comporte en outre des organes 20 de modification de la trainée de l'aéronef. Ces organes 20 comportent par exemple des aérofreins.

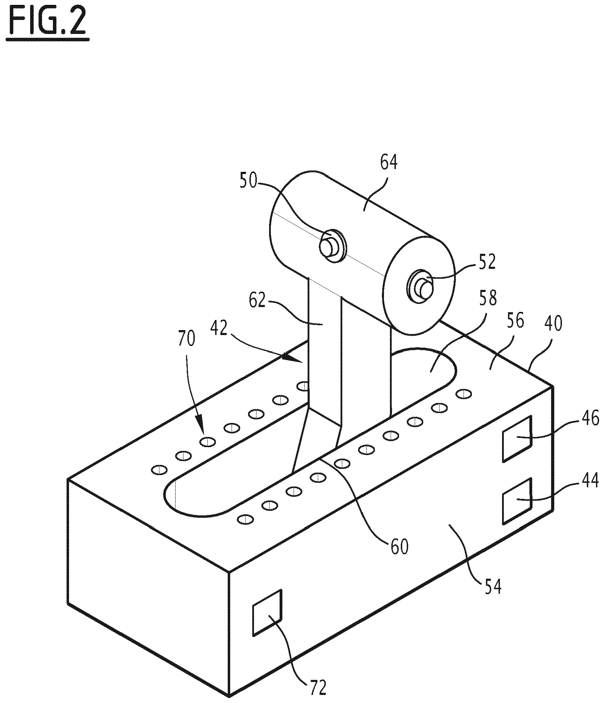

En référence aux figures 1 et 2, le dispositif d'aide au pilotage de l'aéronef au taxiage 12 comporte au moins un organe de commande 30 propre à être actionné par un pilote de l'aéronef 10, à partir d'une position de neutre, pour appliquer une commande d'accélération ou de décélération de l'aéronef 10 lors du taxiage, et une centrale de commande 32, propre à piloter le ou chaque moteur de propulsion 14 de l'aéronef 10 et le ou chaque organe de freinage 16 de l'aéronef, en fonction de la commande d'accélération ou de décélération lors du taxiage établie par le pilote à l'aide de l'organe de commande 30.

Avantageusement, le dispositif d'aide au pilotage de l'aéronef au taxiage 12 comporte en outre un système d'affichage lumineux 34, propre à informer le pilote de l'activation du dispositif d'aide au pilotage de l'aéronef au taxiage 12.

Dans l'exemple représenté sur les figures 1 et 2, l'organe de commande 30 est ici commun avec celui d'un système principal de gestion de variation d'énergie mécanique de l'aéronef 10 durant le vol, tel que décrit dans la demande de brevet français FR3058806 de la Demanderesse.

La centrale de commande 32 est alors une centrale de commande de vol, propre à piloter chaque moteur de propulsion 14, et simultanément chaque organe 20 de modification d'énergie mécanique, en plus de chaque organe de freinage 16.

Le dispositif d'aide au pilotage de l'aéronef au taxiage 12 est alors propre à basculer d'une configuration inactive, lors de phases de décollage, de vol et d'atterrissage de l'aéronef 10 et une configuration active, lors d'un taxiage.

Dans la configuration inactive du dispositif d'aide au pilotage de l'aéronef au taxiage 12, l'organe de commande 30 est propre à être déplacé par le pilote pour établir une commande de variation d'énergie mécanique de l'aéronef 10 destinée à la centrale de commande 32, pour que la centrale de commande 32 pilote chaque moteur de propulsion 14 et chaque organe de modification d'énergie mécanique 20, sans piloter chaque organe de freinage 16.

Le fonctionnement de l'organe de commande 30 et de la centrale de commande 32 dans la configuration inactive du dispositif d'aide au pilotage de l'aéronef au taxiage 12 est décrit en détail dans la demande de brevet français FR3058806. Il ne sera pas décrit en détail plus après.

Dans la configuration active du dispositif d'aide au pilotage de l'aéronef au taxiage 12, l'organe de commande 30 est propre à être déplacé par le pilote pour établir une commande d'accélération ou de décélération de l'aéronef 10 lors du roulage, destinée à la centrale de commande 32, pour que la centrale de commande 32 pilote chaque moteur de propulsion 14 et chaque organe de freinage 16 afin d'appliquer la commande d'accélération ou de décélération.

Comme illustré par la figure 2, l'organe de commande 30 comporte un support 40, une manette 42, montée mobile dans le support 40 et au moins un capteur 44 de position, destiné à mesurer la position de la manette mobile 42 par rapport au support 40.

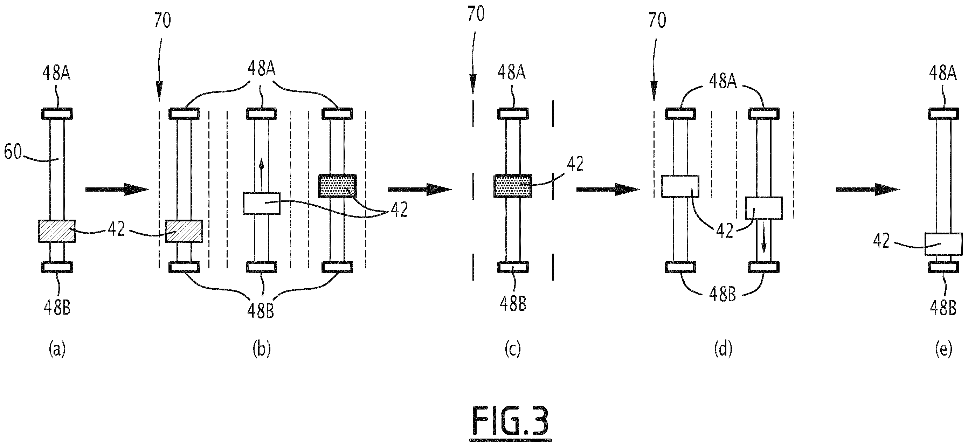

L'organe de commande 30 comporte en outre un système actif 46 d'application d'une force sur la manette mobile 42, propre à ramener la manette mobile 42 dans une configuration de neutre une fois la vitesse de taxiage souhaitée atteinte et propre à créer des butées 48A, 48B respectives d'accélération maximale et de décélération maximale (visibles sur les figures 3 à 8), de part et d'autre de la course de la manette mobile 42.

L'organe de commande 30 comprend en outre au moins un bouton 50 d'activation de la configuration active du dispositif d'aide au pilotage de l'aéronef au taxiage 12, et au moins un bouton 52 de retour à la configuration inactive du dispositif d'aide au pilotage de l'aéronef au taxiage 12.

En variante, les boutons 50, 52 sont remplacés par un ou plusieurs boutons par exemple situés sur le panneau de guidage (« guidance panel » en anglais) ou sur un écran de l'aéronef 10.

Par ailleurs, une action du pilote sur l'organe d'actionnement 18 des organes de freinage 16 provoque également le retour à la configuration inactive du dispositif d'aide au pilotage de l'aéronef au taxiage 12. Avantageusement, ceci est également le cas lors de l'activation d'un autre mode de pilotage de l'aéronef par exemple un mode de décollage (« mode TO ») ou un mode de taxiage automatique.

Dans cet exemple, le support 40 est propre à être placé dans le cockpit de l'aéronef 10, de préférence entre les sièges du cockpit, dans le pylône central.

Comme illustré par la figure 2, le support 40 comporte un socle 54 ajouré et un capot supérieur 56 monté sur le socle 54 à travers lequel la manette mobile 42 est engagée.

Le socle 40 définit un volume intérieur 58 dans lequel une partie inférieure (non visible) de la manette mobile 30 et le système actif d'application de force 46 sont insérés.

Le capot supérieur 56 ferme le volume intérieur vers le haut en définissant une glissière longitudinale 60 pour le guidage du déplacement (en rotation ou en translation) de la manette mobile 42.

La glissière 60 s'étend avantageusement parallèlement à l'axe longitudinal de l'aéronef 10.

En référence à la figure 2, la manette mobile 42 comporte une tige 62 engagée à travers la glissière 60, et une tête 64 montée à l'extrémité supérieure de la tige 62 pour être saisie par la main d'un utilisateur du dispositif d'aide au pilotage de l'aéronef au taxiage 12, notamment un pilote. La tête 64 porte ici les boutons 50, 52.

La manette mobile 42 est propre à être déplacée dans la glissière 60 par rapport à une position de neutre. Le déplacement de la manette mobile 42 par rapport à la position de neutre dans un premier sens (ici vers l'avant) définit une commande d'accélération. Le déplacement de la manette mobile 42 par rapport à la position de neutre dans un deuxième sens (ici vers l'arrière), opposé au premier sens, définit une commande de décélération.

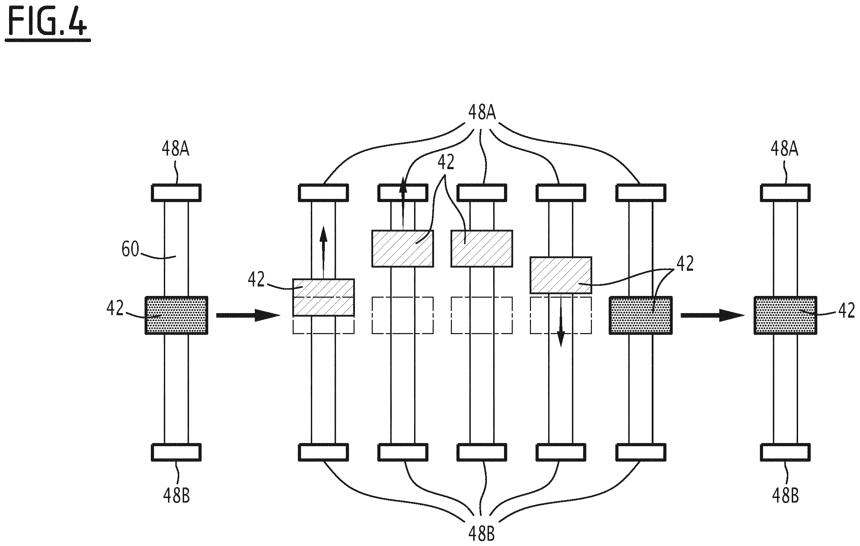

Dans un premier exemple illustré sur les figures 4 à 8, la position de neutre est fixe.

Le capteur de position 44 est propre à mesurer une information représentative de la position de la manette mobile 42 dans la glissière 60, et à transmettre à chaque instant l'information représentative à la centrale de commande 32 pour que la centrale de commande engendre une commande d'accélération ou de décélération de l'aéronef 10 agissant sur chaque moteur de propulsion 14 de l'aéronef ou/et sur chaque organe de freinage 16, en fonction de l'écart entre la position courante de la manette mobile 42 et la position de neutre.

Le système actif d'application d'une force 46 comporte au moins un actionneur et une unité de commande de l'actionneur, raccordée à la centrale de commande 32 pour piloter la force appliquée sur la manette mobile 42 et le mouvement de la manette mobile 42 dans la glissière 60.

Le système actif d'application d'une force 46 est par exemple propre à engendrer une force s'opposant au déplacement de la manette mobile 42 lorsque le pilote saisit la manette mobile 42 et la déplace, pour opposer une résistance au déplacement engendré par le pilote.

Le système actif d'application d'une force 46 est en outre propre, une fois que le pilote a relâché la manette mobile 42, à engendrer une force de sollicitation de la manette mobile 42 ramenant la manette mobile 42 vers la position de neutre.

En outre, lorsque le déplacement de la manette mobile 42 par rapport à la position de neutre correspond à une accélération maximale autorisée par les lois de la centrale de commande 32, ou à une décélération minimale autorisée par les lois de la centrale de commande 32, le système actif d'application d'une force 46 est propre à créer une force de butée, matérialisant respectivement la butée d'accélération maximale 48A ou la butée de décélération minimale 48B sur la course de la manette 42.

La centrale de commande 32 est propre, en fonction de la position de la manette 42 dans la glissière 60, à déterminer la commande d'accélération ou de décélération de l'aéronef 10 souhaitée lors du taxiage et à commander chaque moteur de propulsion 14 et/ou chaque organe de freinage 16 pour appliquer cette commande.

Par exemple, la centrale de commande 32 contient une table ou une formule de correspondance associant à chaque déplacement de la manette 42, mesuré par le capteur de position 44, une valeur d'accélération ou de décélération à commander.

Ainsi, chaque déplacement de la manette mobile 42 provoqué par le pilote à l'écart de la position de neutre vers la butée d'accélération maximale 48A définit une commande d'accélération qui est appliquée par la centrale de commande 32, produisant une augmentation de vitesse de l'aéronef 10, à l'accélération commandée.

Chaque déplacement de la manette 42 provoqué par le pilote à l'écart de la position de neutre vers la butée de décélération maximale 48B définit une commande de décélération qui est appliquée par la centrale de commande 32, produisant une diminution de vitesse de l'aéronef 10, à la décélération commandée.

Lorsque le pilote relâche la manette 42, un retour à une accélération nulle se produit, et la centrale de commande 32 maintient la vitesse courante de l'aéronef 10. Le système actif d'application de force 46 ramène la manette mobile 42 dans la position de neutre.

Dans tous les cas, le pilote est apte à observer la vitesse courante de l'aéronef, mesurée par le capteur de vitesse de roulage sur un afficheur du cockpit.

En outre, l'unité de commande du système actif d'application de force 46 est propre à déterminer à chaque instant lors du roulage quelle est la commande maximale possible d'accélération de l'aéronef 10, en tenant compte de la vitesse courante de l'aéronef 10, d'une vitesse maximale prédéfinie que peut atteindre l'aéronef 10 lors du roulage (par exemple comprise entre 30 nœuds et 50 nœuds, soit entre 55 km/h et 92 km/h) et à modifier la position de la butée d'accélération maximale 48A appliquée par le système actif d'application de force 46 en fonction de la commande maximale possible d'accélération pouvant être appliquée.

Par ailleurs, le système actif d'application de force 46 est propre à déplacer la manette mobile 42 depuis la position courante de commande de la variation d'énergie mécanique (correspondant à la poussée courante appliquée par chaque moteur 14) vers la position de neutre lors du passage du dispositif d'aide au pilotage de l'aéronef au taxiage 12 dans la configuration active, et à déplacer la manette mobile 42 vers la position courante de commande de la variation d'énergie mécanique (correspondant à la poussée courante appliquée par chaque moteur 14) lors du passage du dispositif d'aide au pilotage de l'aéronef au taxiage 12 dans la configuration inactive.

Le système d'affichage lumineux 34 comporte par exemple au moins une rampe lumineuse 70, disposée au voisinage de la manette de commande 42, et une unité de commande 72 de la ou de chaque rampe lumineuse 70, propre à afficher au moins une indication lumineuse en au moins un point donné de la rampe lumineuse 70.

Comme illustré par la figure 3, l'unité de commande 72 est par exemple propre à afficher, sur la rampe lumineuse 70, une première indication lumineuse représentative de l'activation du dispositif d'aide au pilotage de l'aéronef au taxiage 12 (voir configuration (b) sur la figure 3), une deuxième indication lumineuse représentative du fonctionnement courant du dispositif d'aide au pilotage de l'aéronef au taxiage 12 (voir configuration (c) sur la figure 3), et une troisième indication lumineuse représentative de la désactivation du dispositif d'aide au pilotage de l'aéronef au taxiage 12 (voir configuration (d) sur la figure 3).

Dans cet exemple, la première indication lumineuse consiste à illuminer une pluralité de points de la rampe 70 sur toute la longueur de la glissière 60. La deuxième indication lumineuse consiste à illuminer uniquement la position des butées 48A, 48B et la position de neutre. La troisième indication lumineuse consiste en l'illumination de lampes de la rampe 70 allant de la butée d'accélération maximale 48A à la position courante de la manette mobile 42.

Un procédé de pilotage au taxiage de l'aéronef 10 par l'intermédiaire du dispositif d'aide au pilotage de l'aéronef au taxiage 12 va maintenant être décrit. Ce procédé est par exemple mis en œuvre après que l'aéronef 10 s'est posé sur une piste d'atterrissage, notamment après qu'un système de freinage automatique lors de l'atterrissage a été désactivé. En variante, il est mis en œuvre depuis le point de parking de l'aéronef jusqu'à la piste de décollage.

Lorsque le pilote souhaite utiliser le dispositif d'aide au pilotage de l'aéronef au taxiage 12, il le passe en configuration active, en pressant par exemple le bouton d'activation 50 sur la manette mobile 42.

Dans l'exemple représenté sur la figure 3, le système d'affichage lumineux 34 affiche avantageusement la première indication lumineuse (voir étape (b) sur la figure 3).

Le système actif d'application de force 16 déplace la manette mobile 42 jusqu'à la position de neutre, représentée par le carré en pointillés sur la figure 3.

La manette mobile 42 reste donc au repos dans cette position de neutre, qui est avantageusement marquée par une illumination locale de la rampe 70, selon la deuxième indication lumineuse, comme illustré sur l'étape (c) de la figure 3.

En référence à la figure 4, si le pilote souhaite se déplacer plus rapidement lors du taxiage, il saisit la manette mobile 42, et la déplace vers la butée d'accélération maximale 48A, à l'écart de la position de neutre (représentée en pointillés) pour définir une accélération souhaitée de l'aéronef 10 lors du roulage.

Le déplacement de la manette mobile 42, et l'écart établi par rapport à la position de neutre définit alors une commande d'accélération. La centrale de commande 32 reçoit l'information représentative provenant du capteur de position 44, et détermine la commande d'accélération à appliquer. Il pilote alors le ou chaque moteur de propulsion 14 pour atteindre l'accélération souhaitée. La vitesse de l'aéronef 10 augmente progressivement en suivant l'accélération fixée par la commande donnée par le pilote.

Ceci évite de trop accélérer l'aéronef 10 et maintient le confort des passagers.

Lorsque le pilote est satisfait de la vitesse atteinte, il relâche la manette mobile 42, et l'accélération décroît pour atteindre une accélération nulle à laquelle la centrale de commande 32 maintient la vitesse courante de l'aéronef 10.

Comme illustré par la figure 4, le système actif d'application de force 46 ramène la manette mobile 42 dans la position de neutre.

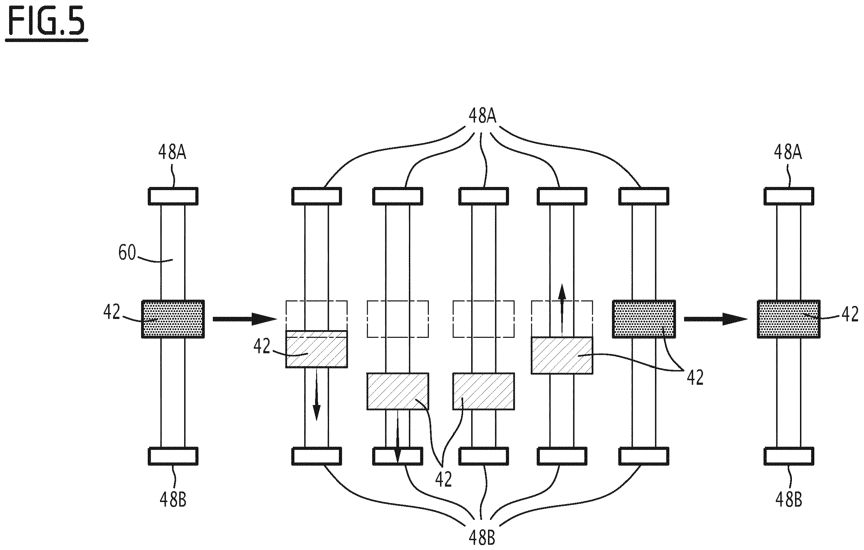

Si le pilote souhaite au contraire appliquer une commande de décélération, comme illustré par la figure 5, il déplace la manette mobile 42 vers la butée de décélération maximale 48B.

Le déplacement de la manette 42, et l'écart établi par rapport à la position de neutre définit alors une commande de décélération. La centrale de commande 32 reçoit l'information représentative provenant du capteur de position 44, et détermine la commande de décélération à appliquer.

La centrale de commande 32 agit alors sur chaque organe de freinage 16, et/ou sur chaque moteur de propulsion 14, pour atteindre la décélération souhaitée. La vitesse de l'aéronef diminue progressivement en suivant la décélération fixée par la commande donnée par le pilote.

Lorsque le pilote est satisfait de la vitesse obtenue, il relâche la manette 42 et la décélération décroît pour atteindre une accélération nulle à laquelle la centrale de commande 32 maintient la vitesse courante de l'aéronef 10.

Comme illustré par la figure 5, le système actif d'application de force 46 ramène la manette mobile 42 dans la position de neutre.

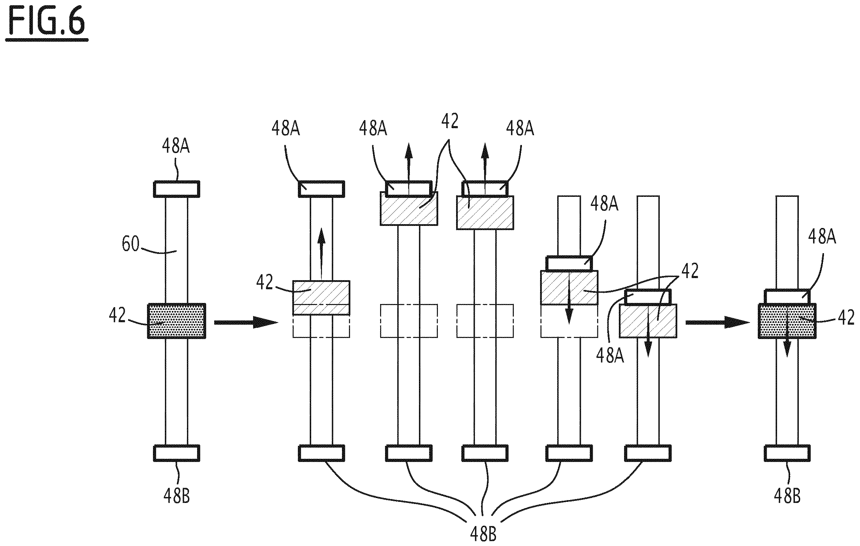

Dans l'exemple de la figure 6, si le pilote déplace et maintient la manette mobile 42 jusqu'à la butée d'accélération maximale 48A, la butée d'accélération maximale 48A reste fixe tant que la commande d'accélération ainsi définie reste possible, compte tenu de la vitesse courante de l'aéronef et de la vitesse maximale prédéfinie de l'aéronef 10.

Cependant, lorsque la vitesse de l'aéronef 10 se rapproche de la vitesse maximale prédéfinie, le système actif d'application de force 16 détermine que la commande maximale possible d'accélération diminue et déplace en conséquence la butée d'accélération maximale 48A vers la position de neutre, en poussant la manette mobile 42 vers la position de neutre.

Lorsque la vitesse maximale prédéfinie est atteinte, la butée d'accélération maximale 48A empêche la manette mobile 42 d'aller au-delà de la position de neutre vers l'avant.

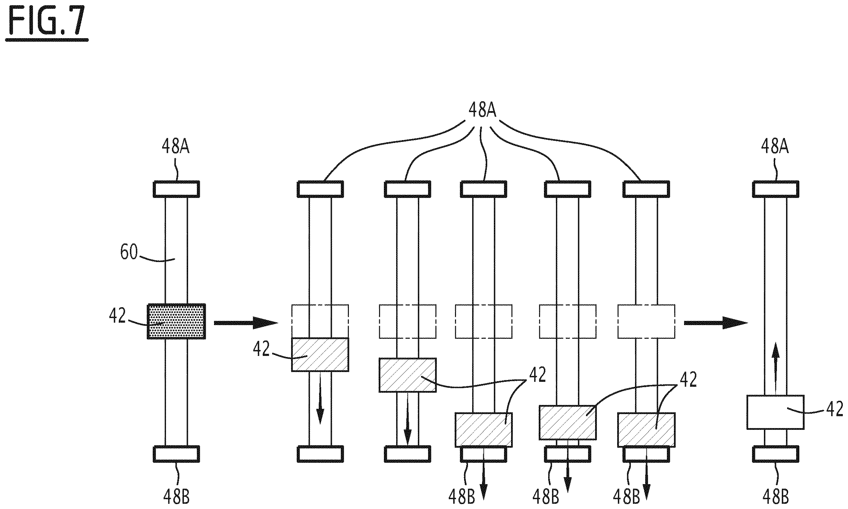

De même, comme illustré par la figure 7, lorsque le pilote souhaite décélérer fortement, il déplace la manette mobile 42 jusqu'à la butée de décélération maximale 48B, et la maintient dans cette position, éventuellement jusqu'à l'arrêt de l'aéronef 10.

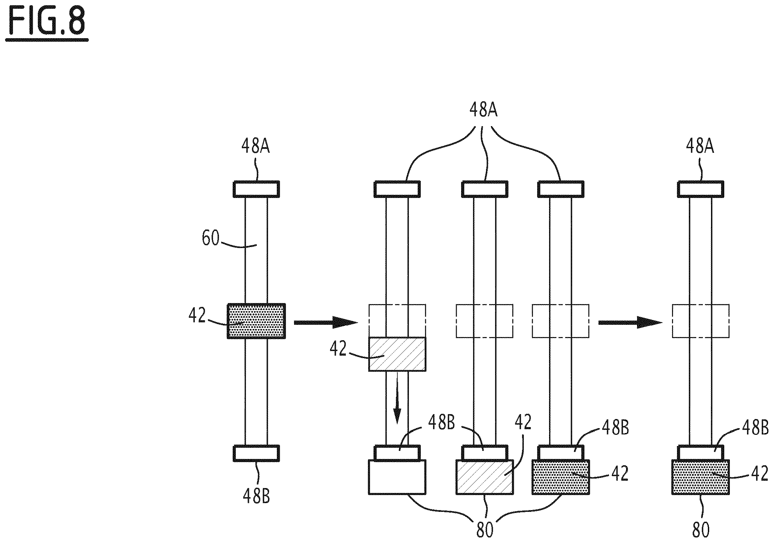

Dans la variante de la figure 8, le système d'activation de force 46 est apte à définir une butée de décélération maximale 48B qui est franchissable par le pilote, et un cran 80 situé au-delà de la butée de décélération maximale 48B. Lorsque le pilote franchit la butée de décélération maximale 48B, et place la manette mobile 42 dans le cran 80, la manette mobile 42 reste maintenue dans le cran 80, même si le pilote relâche la manette mobile 42, jusqu'à l'arrêt de l'aéronef.

Dans l'exemple représenté sur les figures 5 à 8, la position de neutre est une position de neutre fixe. Elle correspond à un point fixe de la glissière 60 par exemple situé au milieu de la glissière 60.

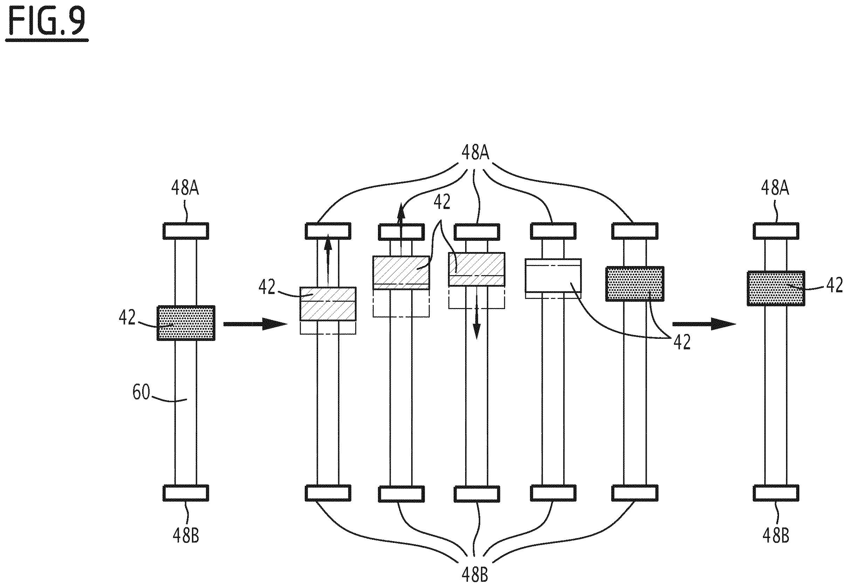

Dans une variante illustrée par les figures 9 à 13, la position de neutre est une position de neutre mobile qui se déplace le long de la glissière 60 en fonction de la vitesse courante de l'aéronef et de la vitesse maximale possible lors du roulage prédéfinie pour l'aéronef 10.

La position de neutre mobile entre la butée d'accélération maximale 48A et la butée de décélération maximale 48B donne une indication sur le niveau de la vitesse courante dans l'intervalle de vitesses de taxiage autorisées [0 ; 50] nœuds, soit entre 0 km/h et 93 km/h. Le système actif d'application de force 46 asservit la manette mobile 42 à la position de neutre mobile, même en l'absence d'action du pilote sur la manette mobile 42.

Dans l'exemple illustré sur la figure 9, lorsque le pilote déplace la manette 42 pour appliquer une commande d'accélération, le déplacement de la manette mobile 42 est limité en bas par la position du neutre mobile et en haut par la butée d'accélération maximale 48A, qui reste fixe.

La commande d'accélération définie par le pilote par rapport à la position de neutre mobile conduit la centrale de commande 32 à accélérer l'aéronef 10 en maintenant la commande d'accélération souhaitée, ce qui augmente la vitesse de l'aéronef 10. La position de neutre mobile se rapproche donc progressivement de la butée d'accélération maximale 48A, puisque la vitesse courante de l'aéronef augmente.

Lorsque le pilote relâche la manette mobile 42, celle-ci est sollicitée vers la nouvelle position de neutre mobile, qui est différente de la position de neutre mobile initiale, avant que la commande d'accélération ait été appliquée.

La position de neutre mobile dans laquelle la manette mobile 42 est ramenée donne donc au pilote une indication visuelle immédiate de la valeur de la vitesse courante par rapport à l'intervalle de vitesse autorisé.

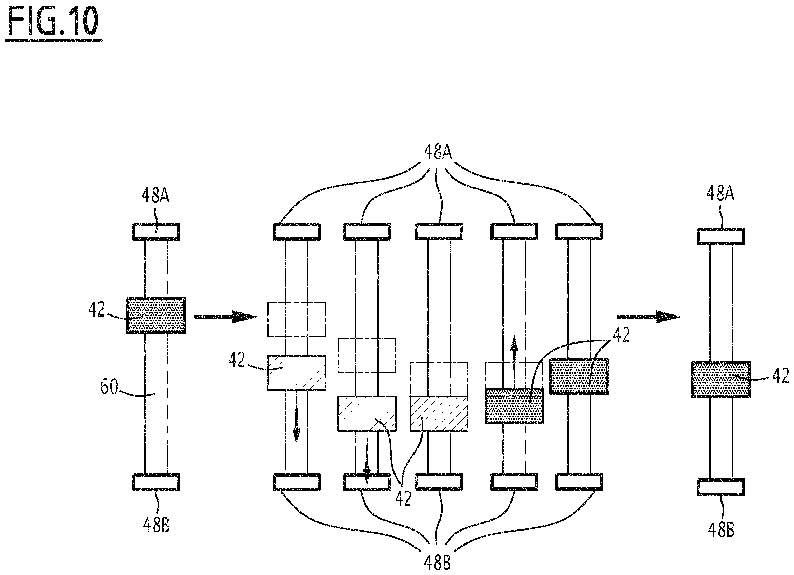

Il en est de même, lors d'une décélération de l'aéronef, comme illustré par la figure 10, où la position de neutre mobile évolue vers la butée de décélération minimale.

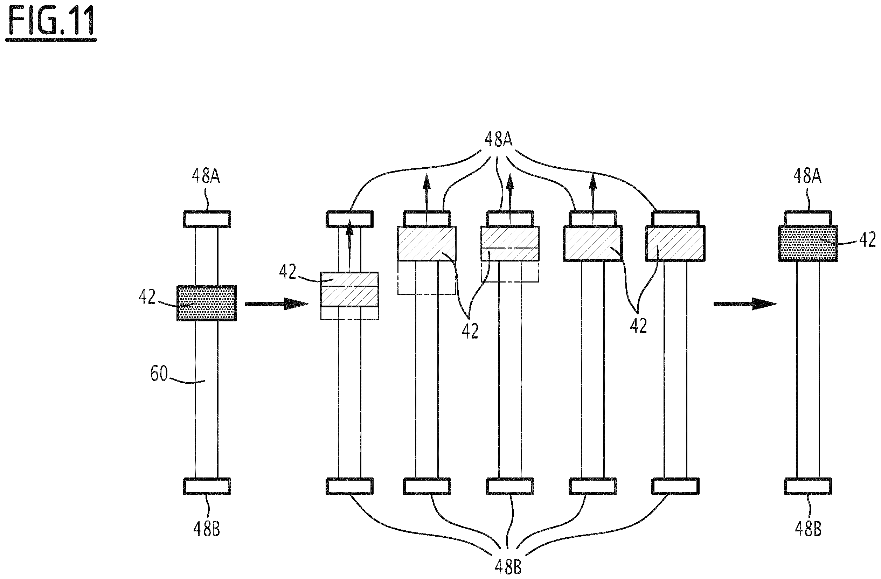

Dans l'exemple de la figure 11, lorsqu'une commande d'accélération maximale est appliquée en plaçant la manette mobile 42 en butée contre la butée d'accélération maximale 48A, la position de neutre mobile se déplace progressivement vers la butée d'accélération maximale 48A, jusqu'à atteindre la position courante de la manette mobile 42 lorsqu'aucune accélération supplémentaire ne peut être appliquée.

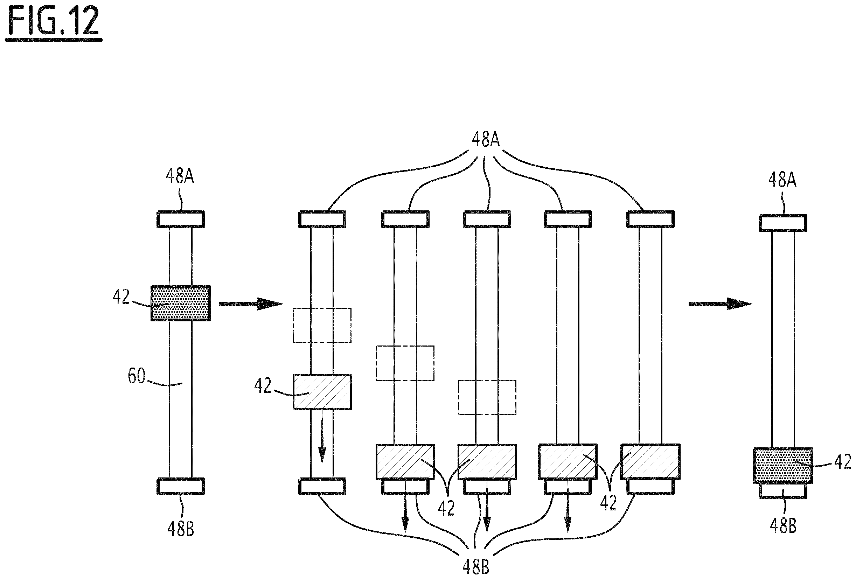

De même, dans l'exemple illustré sur la figure 12, lorsqu'une commande de décélération maximale est appliquée en plaçant la manette mobile 42 en butée contre la butée de décélération maximale 48B, la position de neutre mobile se déplace progressivement vers la butée de décélération maximale 48B, jusqu'à atteindre la position courante de la manette mobile 42 lorsqu'aucune décélération supplémentaire ne peut être appliquée.

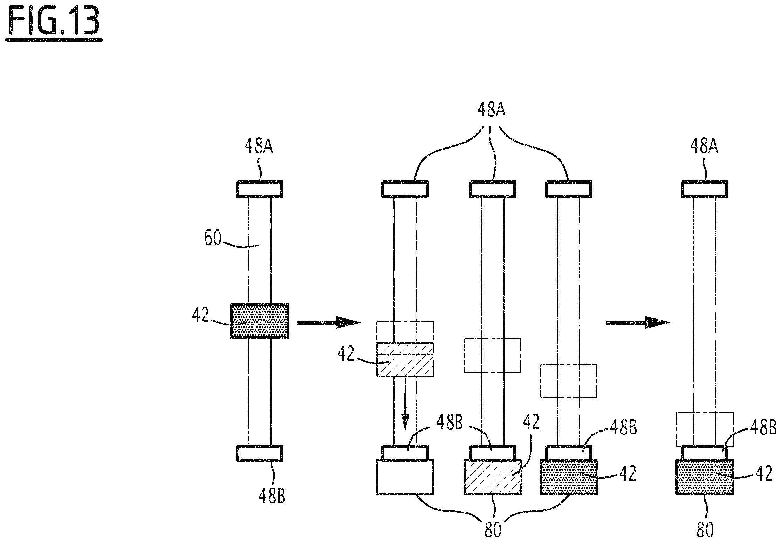

Par ailleurs, en référence à la figure 13, lorsqu'un cran 80 est défini au-delà de la butée de décélération maximale 48B, la position de neutre mobile se déplace jusqu'à la butée de décélération maximale 48B, la manette mobile 42 restant dans le cran 80.

Dans tous les exemples qui viennent d'être décrits, la centrale de commande 32 du dispositif d'aide au pilotage de l'aéronef au taxiage 12 dans la configuration active pilote chaque moteur 14 dans son mode de poussée nominal, avantageusement sans utiliser le mode de poussée inversée (ou « reverse » en anglais). En variante, le mode de poussée inversée pourrait être utilisé.

Grâce au dispositif d'aide au pilotage de l'aéronef au taxiage 12 selon l'invention, les accélérations et les décélérations commandées par le pilote sont maitrisées, ce qui produit un impact très positif pour le confort des passagers, en évitant les à-coups d'accélération ou de décélération qui se produisent lorsque le pilote a du mal à atteindre la vitesse qu'il souhaite appliquer.

Par ailleurs, la charge de travail du pilote est diminuée, puisqu'un seul organe de commande 30, comprenant une manette mobile 42 est utilisé pour piloter à la fois les moteurs de propulsion 14 et l'organe de freinage 16. Le pilotage est réalisé en établissant une commande implicite d'accélération ou de décélération, la vitesse courante étant alors maintenue une fois que le pilote est satisfait de la vitesse atteinte et qu'il relâche l'effort sur la manette.

En outre, le dispositif d'aide au pilotage de l'aéronef au taxiage 12 est propre à maintenir l'aéronef 10 dans un domaine de vitesse défini, grâce à la présence de la butée d'accélération maximale 48A qui est mobile en cas de position de neutre fixe, ou qui est fixe lorsque la position de neutre est mobile.

Dans les exemples qui viennent d'être décrits, l'aéronef 10 est dépourvu de moteur électrique propre à entraîner une roue de l'aéronef, indépendamment des moteurs de propulsion 14 engendrant une poussée de l'aéronef. Ceci allège l'aéronef, simplifie sa maintenance et limite le risque de pannes.

Il n'est pas nécessaire en outre de prévoir un organe supplémentaire dans le cockpit pour le pilotage de la consigne de vitesse.

Dans une autre variante, l'aéronef 10 est équipé d'au moins un moteur électrique propre à entraîner une roue de l'aéronef, indépendamment des moteurs de propulsion 14 engendrant une poussée de l'aéronef.

Le dispositif d'aide au pilotage de l'aéronef au taxiage 12 est alors propre à piloter le moteur électrique et chaque organe de freinage 16 pour appliquer la commande d'accélération ou de décélération définie par l'organe de commande 30, et non une consigne de vitesse, ce qui améliore le confort des passagers.

Dans une variante, l'organe de commande 30 du dispositif d'aide au pilotage de l'aéronef au taxiage 12 est un organe de commande additionnel par rapport à l'organe de commande de la variation d'énergie mécanique de l'aéronef utilisé pendant le décollage, le vol et l'atterrissage.

Dans une autre variante, l'organe de commande 30 est dépourvu de manette mobile. Il comprend par exemple des boutons matériels ou logiciels d'accélération et de décélération qui permettent de piloter un déplacement d'un curseur par rapport à une position de neutre.

Un afficheur représente une jauge avec le curseur, la position de neutre, ainsi que les butées d'accélération maximale et de décélération minimale.

Dans les exemples qui viennent d'être décrits, la commande de taxiage est une commande d'accélération ou de décélération.

Dans une variante, la commande de taxiage est une consigne de vitesse de roulage. La charge du pilote reste diminuée par le contrôle conjoint de chaque moteur 14 et de chaque organe de freinage 16 par le dispositif de pilotage au taxiage 12 dans sa configuration active.

## Revendications

1. Dispositif (12) d'aide au pilotage d'un aéronef (10) au taxiage, comportant :
- un organe de commande (30), propre à être actionné par un pilote à partir d'une position de neutre pour définir une commande de pilotage au taxiage ;
- une centrale de commande (32), propre à piloter au moins un moteur (14) de l'aéronef pour appliquer la commande de pilotage au taxiage définie par le pilote ;
dans lequel la centrale de commande est propre à piloter en outre au moins un organe de freinage (16) de l'aéronef (10) pour appliquer la commande de pilotage au taxiage définie par le pilote,
**caractérisé en ce que**, pour définir la commande de pilotage au taxiage, l'organe de commande (30) est propre à être déplacé par le pilote jusqu'à une butée de commande de pilotage au taxiage maximale (48A) et éventuellement jusqu'à une butée de commande de pilotage au taxiage minimale (48B),
et **en ce que** la butée de commande de pilotage au taxiage maximale (48A) est propre à se déplacer suivant la course de l'organe de commande (30) pour limiter la course de l'organe de commande (30) en fonction de la vitesse courante de l'aéronef (10).

2. Dispositif (12) d'aide au pilotage d'un aéronef (10) au taxiage selon la revendication 1, dans lequel, après application de la commande de pilotage au taxiage, l'organe de commande (30) est ramené vers la position de neutre.

3. Dispositif (12) d'aide au pilotage d'un aéronef (10) au taxiage selon la revendication 2, dans lequel la position de neutre est un neutre fixe par rapport à une course de l'organe de commande (30), l'organe de commande (30) étant ramené à la position de neutre fixe.

4. Dispositif (12) d'aide au pilotage d'un aéronef (10) au taxiage selon la revendication 2, dans lequel la position de neutre est une position de neutre mobile par rapport à une course de l'organe de commande (30), l'organe de commande (30) étant ramené à la position de neutre mobile ou/et la position de neutre mobile se déplaçant vers la position courante de l'organe de commande (30).

5. Dispositif (12) d'aide au pilotage d'un aéronef (10) au taxiage selon l'une quelconque des revendications précédentes, dans lequel la butée de de commande de pilotage au taxiage minimale (48B) est propre à être franchie pour atteindre un cran (80) de commande de pilotage au taxiage minimale dans lequel l'organe de commande (30) est immobilisé en position.

6. Dispositif (12) d'aide au pilotage d'un aéronef (10) au taxiage selon l'une quelconque des revendications précédentes, dans lequel le moteur (14) est un moteur de propulsion de l'aéronef (10), notamment un moteur à réaction ou un turbopropulseur, propre à exercer une force de poussée sur l'aéronef ou dans lequel le moteur est un moteur électrique d'entrainement d'une roue de l'aéronef (10).

7. Dispositif (12) d'aide au pilotage d'un aéronef (10) au taxiage selon la revendication 6, dans lequel l'organe de commande (30) comporte une manette mobile (42) de pilotage d'au moins un moteur (14) de l'aéronef (10) propre à exercer une force de poussée et/ou de pilotage d'un organe (20) de modification de la trainée de l'aéronef (10) propre à réduire l'énergie mécanique de l'aéronef, le dispositif (12) d'aide au pilotage au taxiage étant propre à basculer entre une configuration inactive, lors de phases de décollage, de vol et d'atterrissage et une configuration active lors d'un taxiage.

8. Dispositif (12) d'aide au pilotage d'un aéronef (10) au taxiage selon la revendication 7, dans lequel dans la configuration inactive du dispositif (12) d'aide au pilotage au taxiage, l'organe de commande (30) est propre à être déplacé par le pilote pour établir une commande de variation d'énergie mécanique totale de l'aéronef (10) destinée à la centrale de commande (32), pour que la centrale de commande (32) pilote le ou chaque moteur de propulsion (14) et le ou chaque organe de modification de la trainée (20), sans piloter le ou chaque organe de freinage (16),
et dans lequel, dans la configuration active du dispositif (12) d'aide au pilotage au taxiage, l'organe de commande (30) est propre à être déplacé par le pilote pour établir une commande de pilotage au taxiage de l'aéronef (10) lors du roulage, destinée à la centrale de commande (32), pour que la centrale de commande (32) pilote chaque moteur de propulsion (14) et le ou chaque organe de freinage (16).

9. Dispositif (12) d'aide au pilotage d'un aéronef (10) au taxiage selon la revendication 7 ou 8, comprenant un bouton (50) d'activation du dispositif d'aide de pilotage au taxiage (12) propre à passer le dispositif d'aide de pilotage au taxiage (12) dans la configuration active, le bouton (50) d'activation étant avantageusement disposé sur la manette mobile (42), le dispositif comprenant éventuellement un bouton (52) de désactivation du dispositif d'aide de pilotage au taxiage (12), propre à passer le dispositif d'aide de pilotage au taxiage (12) dans la configuration inactive, le bouton (52) de désactivation étant avantageusement disposé sur la manette mobile (42).

10. Dispositif (12) d'aide au pilotage d'un aéronef (10) au taxiage selon l'une quelconque des revendications 8 à 9, comprenant un système d'affichage lumineux (34) propre à produire au moins un indicateur lumineux d'activation, de fonctionnement ou/et de désactivation du dispositif de pilotage du taxiage (12).

11. Dispositif (12) d'aide au pilotage d'un aéronef (10) au taxiage selon l'une quelconque des revendications précédentes, dans lequel la commande de pilotage au taxiage est une commande de vitesse de roulage de l'aéronef (10) ou est une commande d'accélération ou de décélération de l'aéronef (10) lors du roulage.

12. Aéronef (10), comportant un dispositif (12) d'aide au pilotage au taxiage selon l'une quelconque des revendications précédentes, au moins un moteur (14) et au moins un organe de freinage (16), propres à être pilotés par la centrale de commande (32) pour appliquer la commande de pilotage au taxiage établie par l'organe de commande (30), le moteur (14) étant de préférence un moteur de propulsion de l'aéronef (10), notamment un moteur à réaction ou un turbopropulseur, propre à exercer une force de poussée sur l'aéronef (10), l'aéronef (10) étant avantageusement dépourvu de moteur électrique d'entrainement d'une roue de l'aéronef (10).

13. Procédé de pilotage du taxiage d'un aéronef (10), mis en œuvre à l'aide d'un dispositif d'aide au pilotage au taxiage, le procédé comprenant les étapes suivantes :
- actionnement, par un pilote, d'un organe de commande (30) du dispositif (12) d'aide au pilotage au taxiage, à partir d'une position de neutre pour établir une commande de pilotage au taxiage ;
- pilotage d'au moins un moteur (14) de l'aéronef (10) par une centrale de commande (32) du dispositif (12) d'aide au pilotage au taxiage pour appliquer la commande de pilotage au taxiage définie par le pilote,
dans lequel la centrale de commande (32) pilote en outre au moins un organe de freinage (16) de l'aéronef (10) pour appliquer la commande de pilotage au taxiage définie par le pilote,
**caractérisé en ce que**, pour définir la commande de pilotage au taxiage, l'organe de commande (30) est propre à être déplacé par le pilote jusqu'à une butée de commande de pilotage au taxiage maximale (48A) et éventuellement jusqu'à une butée de commande de pilotage au taxiage minimale (48B),
et **en ce que** la butée de commande de pilotage au taxiage maximale (48A) se déplace suivant la course de l'organe de commande (30) pour limiter la course de l'organe de commande (30) en fonction de la vitesse courante de l'aéronef (10).

## Patentansprüche

1. Vorrichtung (12) zur Steuerhilfe eines Luftfahrzeugs (10) beim Rollen, umfassend:
- ein Steuerelement (30), das geeignet ist, um von einem Piloten ausgehend von einer Neutralstellung betätigt zu werden, um einen Steuerbefehl zum Rollen zu definieren;
- eine Steuerzentrale (32), die geeignet ist, um mindestens ein Triebwerk (14) des Luftfahrzeugs zu steuern, um den von dem Piloten definierten Steuerbefehl zum Rollen anzuwenden;
wobei die Steuerzentrale geeignet ist, um zusätzlich mindestens ein Bremselement (16) des Luftfahrzeugs (10) anzusteuern, um den von dem Piloten definierten Steuerbefehl zum Rollen anzuwenden,
**dadurch gekennzeichnet, dass** zum Definieren des Steuerbefehls zum Rollen das Steuerelement (30) geeignet ist, um von dem Piloten bis zu einem maximalen Steueranschlag zum Rollen (48A) und optional bis zu einem minimalen Steueranschlag zum Rollen (48B) bewegt zu werden,
und dass der maximale Steueranschlag zum Rollen (48A) geeignet ist, um sich entlang des Wegs des Steuerelements (30) zu bewegen, um den Weg des Steuerelements (30) abhängig von der aktuellen Geschwindigkeit des Luftfahrzeugs (10) zu begrenzen.

2. Vorrichtung (12) zur Steuerhilfe eines Luftfahrzeugs (10) beim Rollen nach Anspruch 1, wobei nach Anwendung des Roll-Steuerbefehls das Steuerelement (30) in die Neutralstellung zurückgeführt wird.

3. Vorrichtung (12) zur Steuerhilfe eines Luftfahrzeugs (10) beim Rollen nach Anspruch 2, wobei die Neutralstellung eine feste Neutralstellung in Bezug auf einen Hub des Steuerelements (30) ist, wobei das Steuerelement (30) in die feste Neutralstellung zurückgeführt wird.

4. Vorrichtung (12) zur Steuerhilfe eines Luftfahrzeugs (10) beim Rollen nach Anspruch 2, wobei die Neutralstellung eine bewegliche Neutralstellung in Bezug auf einen Hub des Steuerelements (30) ist, wobei das Steuerelement (30) in die bewegliche Neutralstellung zurückgeführt wird oder/und die bewegliche Neutralstellung sich in Richtung der aktuellen Position des Steuerelements (30) bewegt.

5. Vorrichtung (12) zur Steuerhilfe eines Luftfahrzeugs (10) beim Rollen nach einem der vorherigen Ansprüche, wobei der minimalen Steueranschlag zum Rollen (48B) geeignet ist, um überwunden zu werden, um eine Raste (80) des Steuerbefehls für minimales Rollen zu erreichen, in der das Steuerelement (30) in seiner Position blockiert ist.

6. Vorrichtung (12) zur Steuerhilfe eines Luftfahrzeugs (10) beim Rollen nach einem der vorherigen Ansprüche, wobei der Motor (14) ein Antriebsmotor des Luftfahrzeugs (10) ist, insbesondere ein Strahltriebwerk oder ein Turboprop-Triebwerk, das geeignet ist, um eine Schubkraft auf das Luftfahrzeug auszuüben, oder bei der der Motor ein Elektromotor zum Antrieb eines Rads des Luftfahrzeugs (10) ist.

7. Vorrichtung (12) zur Steuerhilfe eines Luftfahrzeugs (10) beim Rollen nach Anspruch 6, wobei das Steuerelement (30) einen beweglichen Hebel (42) zum Steuern mindestens eines Motors (14) des Luftfahrzeugs (10), der eine Schubkraft ausüben kann, und/oder zum Steuern eines Elements (20) zur Veränderung des Nachlaufs des Luftfahrzeugs (10) umfasst, das geeignet ist, um die mechanische Energie des Luftfahrzeugs zu reduzieren, die Vorrichtung (12) zur Steuerhilfe beim Rollen geeignet ist, um zwischen einer inaktiven Konfiguration während der Start-, Flug- und Landephasen und einer aktiven Konfiguration beim Rollen umzuschalten.

8. Vorrichtung (12) zur Steuerhilfe eines Luftfahrzeugs (10) beim Rollen nach Anspruch 7, wobei in der inaktiven Konfiguration der Vorrichtung (12) zur Steuerhilfe beim Rollen das Steuerelement (30) geeignet ist, um von dem Piloten verschoben zu werden, um einen für die Steuerzentrale (32) bestimmten Befehl zur Veränderung der gesamten mechanischen Energie des Luftfahrzeugs (10) zu erstellen, damit die Steuerzentrale (32) den oder jeden Antriebsmotor (14) und das oder jedes Element zur Veränderung des Luftwiderstands (20) steuert, ohne das oder jedes Bremsorgan (16) zu steuern,
und wobei in der aktiven Konfiguration der Vorrichtung (12) zur Steuerhilfe beim Rollen das Steuerelement (30) geeignet ist, um durch den Piloten bewegt zu werden, um einen Steuerbefehl beim Rollen des Flugzeugs (10) zu erstellen, der für die Steuerzentrale (32) bestimmt ist, damit die Steuerzentrale (32) jeden Antriebsmotor (14) und das oder jedes Bremselement (16) steuert.

9. Vorrichtung (12) zur Steuerhilfe eines Luftfahrzeugs (10) beim Rollen nach Anspruch 7 oder 8, umfassend einen Knopf (50) zum Aktivieren der Vorrichtung (12) zur Steuerhilfe beim Rollen, der geeignet ist, die Vorrichtung (12) zur Steuerhilfe beim Rollen in die aktive Konfiguration zu überführen, wobei der Aktivierungsknopf (50) vorteilhafterweise auf dem beweglichen Hebel (42) angeordnet ist, wobei die Vorrichtung optional einen Knopf (52) zur Deaktivierung der Vorrichtung (12) zur Steuerhilfe beim Rollen umfasst, der geeignet ist, um die Vorrichtung (12) zur Steuerhilfe beim Rollen in die inaktive Konfiguration zu überführen, wobei der Deaktivierungsknopf (52) vorteilhafterweise auf dem beweglichen Hebel (42) angeordnet ist.

10. Vorrichtung (12) zur Steuerhilfe eines Luftfahrzeugs (10) beim Rollen nach einem der Ansprüche 8 bis 9, umfassend ein Leuchtanzeigesystem (34), das geeignet ist, um mindestens einen Leuchtindikator für die Aktivierung, den Betrieb oder/und die Deaktivierung der Vorrichtung zum Steuern des Rollens (12) zu erzeugen.

11. Vorrichtung (12) zur Steuerhilfe eines Luftfahrzeugs (10) beim Rollen nach einem der vorherigen Ansprüche, wobei die Steuerung beim Rollvorgang eine Steuerung der Rollgeschwindigkeit des Luftfahrzeugs (10) ist oder eine Steuerung der Beschleunigung oder Verzögerung des Luftfahrzeugs (10) während des Rollvorgangs ist.

12. Luftfahrzeug (10), umfassend eine Vorrichtung (12) zur Steuerhilfe beim Rollen nach einem der vorherigen Ansprüche, mindestens einen Motor (14) und mindestens ein Bremselement (16), die von der Steuerzentrale (32) gesteuert werden können, um den von dem Steuerelement (30) erstellten Steuerbefehl zum Rollen anzuwenden, wobei der Motor (14) vorzugsweise ein Motor zum Antrieb des Luftfahrzeugs (10) ist, insbesondere ein Strahltriebwerk oder ein Turboprop-Triebwerk, das geeignet ist, um eine Schubkraft auf das Luftfahrzeug (10) auszuüben, wobei das Luftfahrzeug (10) vorteilhafterweise keinen Elektromotor zum Antrieb eines Rads des Luftfahrzeugs (10) aufweist.

13. Verfahren zum Steuern des Rollens eines Luftfahrzeugs (10), das mittels einer Vorrichtung zur Steuerhilfe beim Rollen durchgeführt wird, das Verfahren umfassend die folgenden Schritte:
- Betätigen, durch einen Piloten, eines Steuerelements (30) der Vorrichtung (12) zur Steuerhilfe beim Rollen ausgehend von einer Neutralstellung, um einen Steuerbefehl beim Rollen zu erstellen;
- Steuern mindestens eines Motors (14) des Flugzeugs (10) durch eine Steuerzentrale (32) der Vorrichtung (12) zur Steuerhilfe beim Rollen, um den vom Piloten definierten Steuerbefehl beim Rollen anzuwenden,
wobei die Steuerzentrale (32) zusätzlich mindestens ein Bremselement (16) des Flugzeugs (10) steuert, um den vom Piloten definierten Steuerbefehl beim Rollen anzuwenden,
**dadurch gekennzeichnet, dass** zum Definieren des Steuerbefehls zum Rollen das Steuerelement (30) geeignet ist, um von dem Piloten bis zu einem maximalen Steueranschlag zum Rollen (48A) und optional bis zu einem minimalen Steueranschlag zum Rollen (48B) bewegt zu werden,
und dass der maximale Steueranschlag zum Rollen (48A) sich entlang des Wegs des Steuerelements (30) bewegt, um den Weg des Steuerelements (30) abhängig von der aktuellen Geschwindigkeit des Luftfahrzeugs (10) zu begrenzen.

## Claims

1. A device (12) for assisting the control of the taxiing of an aircraft (10), comprising:
- a command member (30), able to be actuated by a pilot from a neutral position to define a taxiing control command;
- a central command system (32), able to control at least one engine (14) of the aircraft to apply the taxiing control command defined by the pilot;
wherein the central control system is also able to control at least one braking member (16) of the aircraft (10), to apply the taxiing control command defined by the pilot,
**characterised in that**, to define the taxiing control command, the command member (30) is able to be moved by a pilot up to a maximum taxiing control command stop (48A) and optionally up to a minimum taxiing control command stop (48B),
and **in that** the maximum taxiing control command stop (48A) is adapted to move along the stroke of the command member (30) to limit the stroke of the command member (30) as a function of the current speed of the aircraft (10).

2. The device (12) for assisting the control of the taxiing of an aircraft (10) according to claim 1, wherein, after application of the taxiing control command, the command member (30) is returned to the neutral position.

3. The device (12) for assisting the control of the taxiing of an aircraft (10) according to claim 2, wherein the neutral position is a fixed neutral with respect to a stroke of the command member (30), the command member (30) being returned to the fixed neutral position.

4. The device (12) for assisting the control of the taxiing of an aircraft (10) according to claim 2, wherein the neutral position is a movable neutral position relative to a stroke of the command member (30), the command member (30) being automatically returned to the movable neutral position and/or the movable neutral position moving to the current position of the command member (30).

5. The device (12) for assisting the control of the taxiing of an aircraft (10) according to any of the preceding claims, wherein the minimum taxiing control command stop (48B) is adapted to be overcome to reach a maximum taxiing control command detent (80) wherein the command member (30) is locked in position.

6. The device (12) for assisting the control of the taxiing of an aircraft (10) according to any of the preceding claims, wherein the motor (14) is a propulsion engine of the aircraft (10), in particular a jet engine or a turboprop engine, able to exert a thrust force on the aircraft, and/or wherein the motor is an electric motor for driving a wheel of the aircraft (10).

7. The device (12) for assisting the control of the taxiing of an aircraft (10) according to claim 6, wherein the command member (30) comprises a movable stick (42) for controlling at least one engine (14) of the aircraft (10) able to exert a thrust force and/or for controlling a member (20) for modifying the drag of the aircraft (10) able to reduce the mechanical energy of the aircraft, the device (12) for assisting the control of the taxiing being able to switch between an inactive configuration during the take-off, flight and landing phases and an active configuration during taxiing.

8. The device (12) for assisting the control of the taxiing of an aircraft (10) according to claim 7, in which, in the inactive configuration of the device (12) for assisting the control of the taxiing, the command member (30) is able to be moved by the pilot in order to send a command for varying the total mechanical energy of the aircraft (10) to the central command system (32), so that the central command system (32) controls the or each propulsion engine (14) and the or each drag modification member (20), without controlling the or each braking member (16),
and wherein, in the active configuration of the device (12) for assisting the control of the taxiing, the command member (30) is adapted to be moved by the pilot to set an aircraft (10) taxiing control command during taxiing, intended for the central command system (32), so that the central command system (32) controls each propulsion engine (14) and the or each braking member (16).

9. The device (12) for assisting the control of the taxiing of an aircraft (10) according to claim 9 or 10, comprising a button (50) for activating the device (12) for assisting the control of the taxiing, which is able to place placing the device (12) for assisting the control of the taxiing in the active configuration, the activation button (50) advantageously being arranged on the movable stick (42), the device optionally comprising a button (52) for deactivating the device (12) for assisting the control of the taxiing, able to place the device (12) for assisting the control of the taxiing in the inactive configuration, the deactivation button (52) advantageously being arranged on the movable stick (42).

10. The device (12) for assisting the control of the taxiing of an aircraft (10) according to any one of claims 8 to 9, comprising a light-up display system (34) able to produce at least one luminous indicator of activation, of operation and/or of deactivation of the device (12) for assisting the control of the taxiing.

11. The device (12) for assisting the control of the taxiing of an aircraft (10) according to any one of the preceding claims, wherein the taxiing control command is a taxi speed command for the aircraft (10) or is an acceleration or deceleration command for the aircraft (10) while taxiing.

12. An aircraft (10) comprising a device (12) for assisting the control of the taxiing according to any one of the preceding claims, at least one engine (14) and at least one braking member (16), able to be controlled by the central command system (32) in order to apply the taxiing control command set by the control member (30), the engine (14) preferably being an aircraft (10) propulsion engine, in particular a jet engine or a turboprop engine, able to exert a thrust force on the aircraft (10), the aircraft (10) advantageously not having an electric motor for driving a wheel of the aircraft (10).

13. A method for controlling the taxiing of an aircraft (10), carried out with the aid of a device for assisting the control of the taxiing, the method comprising the following steps:
- actuation, by a pilot, of a command member (30) of the device (12) for assisting the control of the taxiing, from a neutral position in order to establish a taxiing control command;
- controlling at least one engine (14) of the aircraft (10) by a central command system (32) of the device (12) for assisting the control of the taxii to apply the taxiing control command defined by the pilot,
wherein the central command system (32) furthermore controls at least one braking member (16) of the aircraft (10) to apply the taxiing control command defined by the pilot,
**characterised in that**, to define the taxiing control command, the command member (30) is movable by a pilot up to a maximum taxiing control command stop (48A) and optionally up to a minimum taxiing control command stop (48B), and
**in that** the maximum taxiing control command stop (48A) moves along the stroke of the command member (30) to limit the stroke of the command member (30) as a function of the current speed of the aircraft (10).
